# FASCICULE DE BREVET EUROPEEN

(11) **EP 3 302 038 B1**
(45) Date de publication et mention de la délivrance du brevet: **06.05.2020**
(21) Numéro de dépôt: 16729207.7
(22) Date de dépôt: 26.05.2016
(51) Int. Cl.: A01K 1/00, F24F 13/12, F24F 7/02

(54) **DISPOSITIF DE DIFFUSION D'AIR À L'INTÉRIEUR D'UNE SALLE, NOTAMMENT D'ÉLEVAGE, D'UN BÂTIMENT.**
VORRICHTUNG ZUM DIFFUNDIEREN VON LUFT IN EINEM RAUM EINES GEBÄUDES, INSBESONDERE EINEM BRUTRAUM
DEVICE FOR DIFFUSING AIR INSIDE A ROOM, NOTABLY A BREEDING ROOM, OF A BUILDING

(30) Priorité: 26.05.2015 FR 1554699
(43) Date de publication de la demande: 11.04.2018
(73) Titulaire: Rosavel, 29600 Sainte-Sève (FR)
(72) Inventeur: LOAËC, Michel, 29600 Saint Martin des Champs (FR); LOAËC, Louis-Guillaume, 29600 Sainte Seve (FR)
(74) Mandataire: Regimbeau
(86) Numéro de dépôt international: PCT/EP2016/061882
(87) Numéro de publication internationale: WO 2016/189079

(56) Documents cités:
- EP-A2- 1 035 386
- EP-A2- 2 361 499
- AT-B- 388 437
- US-A- 3 174 423

## Description

### DOMAINE TECHNIQUE GENERAL

L'invention se situe dans le domaine de la ventilation des bâtiments.

La présente invention concerne plus précisément un dispositif de diffusion d'air à l'intérieur d'une salle d'un bâtiment, notamment une salle d'élevage d'animaux, de préférence d'élevage de porcs.

L'invention concerne également un bâtiment équipé d'un tel dispositif de diffusion d'air.

### ETAT DE LA TECHNIQUE

A l'intérieur d'un bâtiment d'élevage, les animaux sont généralement répartis dans différentes salles, en fonction de leurs âges, de leurs stades de croissance ou de leurs niveaux de poids. En fonction de ces critères, ils ont également des besoins en oxygénation différents. Les besoins en oxygénation sont également dépendants de la température régnant dans la salle, de l'hygrométrie ambiante de celle-ci et de la vitesse de l'air y circulant.

Pour obtenir de bonnes conditions d'élevage et de croissance des animaux, il est impératif d'assurer une bonne atmosphère autour d'eux et notamment de maîtriser le renouvellement de l'air dans la salle d'élevage et d'éviter les courants d'air.

Le renouvellement d'air dans la salle permet d'évacuer la vapeur d'eau et les gaz toxiques (par exemple l'ammoniac généré par les déjections des animaux qui se sont accumulées dans les pré-fosses situées sous les caillebotis de la salle d'élevage). Ce renouvellement est obtenu par une circulation d'air entre des bouches d'air entrant et un dispositif d'évacuation d'air qui aspire l'air se trouvant dans la salle en créant une dépression à l'intérieur de celle-ci.

Toutefois, les courants d'air sont à éviter car ils peuvent être responsables des remontées de gaz toxiques depuis les pré-fosses, et de l'apparition de problèmes pulmonaires ralentissant la croissance des animaux.

On connaît déjà dans l'état de la technique, des bâtiments dont le plafond des salles d'élevage est muni soit de plaques d'un matériau isolant perforé, soit d'un bardage en aluminium perforé sous lequel se trouve une couche de laine de verre. On connaît également des salles d'élevage dont le plafond est muni de trappes de diffusion d'air actionnées soit manuellement, soit par un actionneur (hydraulique, pneumatique ou électrique par exemple).

Dans la plupart des cas, l'air est extrait hors des salles par un ventilateur, qui crée une dépression à l'intérieur de la salle, ce qui permet ainsi d'aspirer l'air au travers des systèmes isolants ou des trappes lorsque celles-ci sont en position ouverte. Seule la sortie d'air est active, on peut réguler le débit d'air extrait grâce au ventilateur. L'entrée d'air est passive. Dans d'autres cas, l'entrée d'air est active car l'air est pulsé depuis l'extérieur au travers du plafond, en direction de l'intérieur de la salle.

De tels dispositifs de l'état de la technique ont permis de réduire l'indice de consommation (c'est-à-dire le poids d'aliment à fournir pour produire un kilogramme de viande), d'augmenter le gain moyen quotidien (c'est-à-dire le gain en poids de l'animal par jour d'élevage) et de diminuer le taux de perte des animaux.

Toutefois, depuis quelques années, on a constaté que les indices et taux précités stagnaient.

Des essais effectués dans les salles d'élevage ont permis de constater que les perforations des systèmes d'isolation thermique avaient tendance à s'encrasser à cause des poussières et que les trappes créaient des flux d'air directionnels avec un phénomène de "roue", (l'air froid descendant rapidement vers les animaux et l'air chaud remontant au plafond). La circulation d'air n'était donc pas homogène.

En outre, l'actionneur qui actionne les trappes peut tomber en panne.

Le document EP-A-1 035 386 décrit un dispositif de diffusion d'air à l'intérieur d'une salle d'un bâtiment comprenant un corps cylindrique dont la partie supérieure constitue une prise d'air et dont la partie inférieure comprend au moins une fenêtre de diffusion d'air qui s'étend sur sa périphérie, cette fenêtre étant munie d'ailettes.

### PRESENTATION DE L'INVENTION

L'invention a donc pour but de résoudre les inconvénients précités de l'état de la technique.

A cet effet, l'invention a pour but de fournir un dispositif de diffusion d'air qui réponde aux critères suivants :
- il doit permettre l'introduction d'air à une vitesse la plus constante possible, et ce, quel que soit le débit d'air extrait de la salle d'élevage, de façon à optimiser le mélange de l'air froid avec l'air chaud et éviter ainsi les courants d'air,
- il doit permettre d'introduire l'air selon des angles d'inclinaison variables en fonction du débit demandé,
- il doit diffuser l'air dans toutes les directions,
- il doit permettre à chaque animal de recevoir la même quantité d'air neuf.

A cet effet, l'invention concerne un dispositif de diffusion d'air à l'intérieur d'une salle d'un bâtiment, notamment une salle d'élevage d'animaux.

Conformément à l'invention, ce dispositif comprend :
- un corps cylindrique dont la partie supérieure constitue une prise d'air et dont la partie inférieure comprend au moins une fenêtre de diffusion d'air qui s'étend sur sa périphérie, cette fenêtre étant munie d'ailettes sur au moins deux rangées en hauteur, les rangées successives d'ailettes du bas vers le haut étant de plus en plus inclinées par rapport à la verticale,
- un organe d'obturation monté coulissant verticalement à l'intérieur de la partie inférieure dudit corps, cet organe d'obturation comprenant une paroi périphérique cylindrique verticale ou sensiblement verticale et un disque d'obturation central obturant l'espace ménagé à l'intérieur de ladite paroi cylindrique, le diamètre extérieur de ladite paroi cylindrique correspondant au diamètre intérieur de la partie inférieure dudit corps au jeu de coulissement près,

ledit organe d'obturation est mobile entre une position dite "de repos", dans laquelle sa paroi périphérique se trouve en regard de la ou des fenêtre(s) de diffusion du corps, de façon à interdire la circulation d'air depuis la partie supérieure du corps au travers de ladite ou desdites fenêtre(s) de diffusion, et une position dite "de diffusion", dans laquelle sa paroi périphérique ne se trouve plus en regard d'au moins une partie de la surface de ladite ou desdites fenêtre(s) de diffusion du corps, de façon à autoriser la circulation d'air depuis la partie supérieure du corps au travers de ladite ou desdites fenêtres de diffusion,
et le passage de la position de repos à la position de diffusion s'effectue à l'encontre de la force de pesanteur d'un contrepoids, lorsque la pression régnant au niveau de la face inférieure du disque d'obturation est inférieure à celle régnant au niveau de la face supérieure dudit disque.

Grâce à ces caractéristiques de l'invention, et notamment à la coopération entre l'organe d'obturation, les fenêtres et les ailettes, l'air diffusé est orienté plus ou moins horizontalement et à vitesse constante, ce qui évite les courants d'air directement sur les animaux.

L'air diffuse dans toutes les directions puisque le dispositif est cylindrique.

Le dispositif est passif puisqu'il n'est actionné que par une différence de pression ou par le contrepoids.

Selon d'autres caractéristiques avantageuses et non limitatives de l'invention, prises seules ou en combinaison :
- le dispositif comprend un balancier monté pivotant auquel sont fixés ledit organe d'obturation et ledit contrepoids ;
- ledit organe d'obturation a la forme d'une cloche ouverte à son extrémité inférieure, le disque d'obturation constituant le fond de ladite cloche ;
- les fenêtres de diffusion sont munies de trois rangées d'ailettes, les ailettes de la rangée supérieure formant un angle (α) de 75° à 85° par rapport à la verticale, les ailettes de la rangée du milieu formant un angle (β) de 55° à 65° par rapport à la verticale et les ailettes de la rangée inférieure formant un angle (γ) de 35° à 45° par rapport à la verticale ;
- l'extrémité basse de la partie inférieure du corps est obturée par un fond ;
- le balancier comprend un fléau monté articulé à l'une de ses deux extrémités, dite "extrémité d'articulation", à la partie supérieure du corps, le contrepoids est fixé à l'extrémité opposée, dite "active" du fléau et l'organe d'obturation est lié à une extrémité d'un câble dont l'extrémité opposée est fixée à ladite extrémité active du fléau, ce câble passant autour d'une poulie disposée au-dessus du fléau et montée sur une potence fixée à la partie supérieure du corps, de sorte que lorsque l'organe d'obturation descend dans le corps, il entraîne l'extrémité active du fléau vers le haut, tandis que le contrepoids tend à entraîner cette extrémité active vers le bas ;
- le contrepoids est fixé sur le fléau par des moyens de réglage permettant l'ajustement de sa position le long dudit fléau ;
- le dispositif de diffusion d'air comprend un dispositif de sécurité permettant de verrouiller l'organe d'obturation en position de diffusion ;
- le fond comprend une lumière centrale de forme oblongue, le dispositif de sécurité comprend une lamelle verticale présentant deux ailes latérales, cette lamelle étant fixée par un ressort et un fil à l'organe d'obturation et étant disposée de façon que son extrémité inférieure traverse ladite lumière oblongue et fasse saillie hors du fond, cette lamelle pouvant être déplacée vers le bas à l'encontre de la force de rappel du ressort, de façon à entraîner le déplacement de l'organe d'obturation en position de diffusion et à ce que les deux ailes latérales traversent la lumière oblongue et cette lamelle pouvant pivoter angulairement de façon à bloquer lesdites ailes contre la face inférieure du fond du corps ;
- le dispositif comprend au moins un dispositif d'éclairage, tel qu'un bandeau de diodes électroluminescentes (LED), fixé sur la partie inférieure dudit corps cylindrique ;
- le dispositif comprend au moins un capteur analogique ou numérique de mesure du débit d'air à l'intérieur du dispositif de diffusion ou de mesure de la température de l'air ou de mesure de la différence de pression entre les deux faces du disque d'obturation.

L'invention concerne également un bâtiment, notamment d'élevage, comprenant intérieurement une salle présentant une ouverture ménagée dans son plafond. Conformément à l'invention, ce bâtiment est équipé du dispositif de diffusion d'air précité, ce dispositif étant disposé dans l'ouverture ménagée dans le plafond, de façon que la partie inférieure de son corps munie des fenêtres de diffusion se trouve dans ladite salle et que sa partie supérieure se trouve au-dessus dudit plafond.

De préférence, ce bâtiment comprend également un dispositif d'aspiration de l'air se trouvant à l'intérieur de la salle.

Selon une autre variante, le bâtiment comprend un dispositif de pulsation d'air en amont du dispositif de diffusion d'air et la salle est équipée d'au moins une bouche d'évacuation d'air hors de la salle.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est une vue de face du dispositif de diffusion d'air conforme à l'invention,
- la figure 2 est une vue en coupe verticale longitudinale du dispositif de diffusion d'air, prise selon un plan de coupe schématisé par la ligne II-II de la figure 1,
- la figure 3 est une vue en coupe verticale longitudinale du dispositif, prise le long d'un plan de coupe schématisé par la ligne III-III de la figure 1, l'organe d'obturation étant représenté en position de repos,
- la figure 4 est une vue similaire à la figure 3, si ce n'est que l'organe d'obturation est représenté en position de diffusion d'air,
- la figure 5 est une vue de détail des ailettes se trouvant devant l'une des fenêtres de diffusion d'air du dispositif conforme à l'invention,
- et la figure 6 est une vue en perspective d'une partie du dispositif de diffusion d'air conforme à l'invention.

### DESCRIPTION DETAILLEE

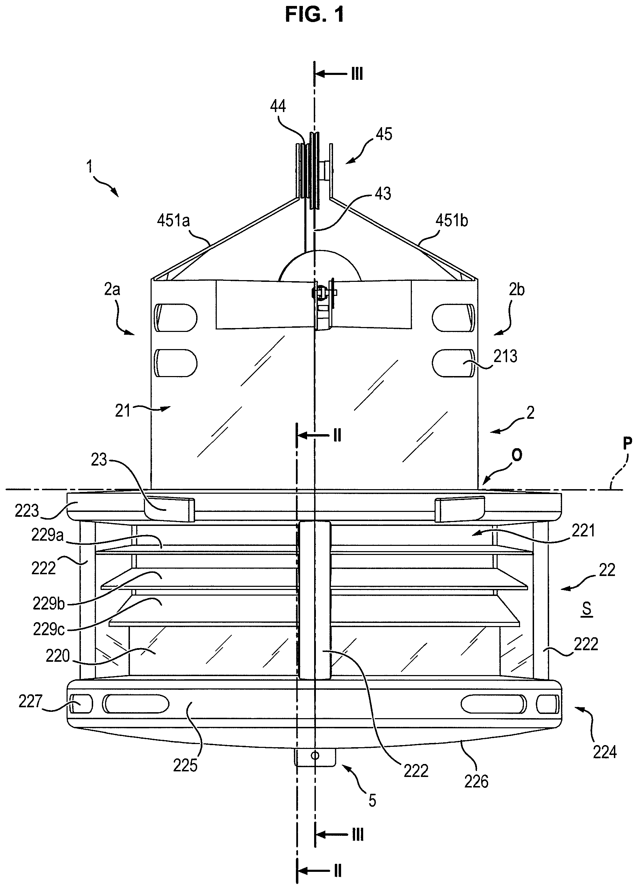

Dans la suite de la description et des revendications, les termes : "supérieur", "inférieur", "haut", "bas", "horizontal" et "vertical" sont à prendre en considération par rapport à la position normale d'utilisation du dispositif de diffusion d'air, qui est celle représentée sur la figure 1.

Le dispositif de diffusion d'air conforme à l'invention va maintenant être décrit. Il est destiné à être installé à l'intérieur de la salle d'un bâtiment, notamment une salle d'élevage d'animaux, tels que, de préférence, des porcs. Le bâtiment n'est pas représenté sur les figures. Sur les figures 1, 3 et 4, on a simplement représenté par un pointillé le plafond P de la salle S du bâtiment, ainsi que l'ouverture O ménagée dans le plafond et au travers de laquelle est installé le dispositif de diffusion d'air conforme à l'invention.

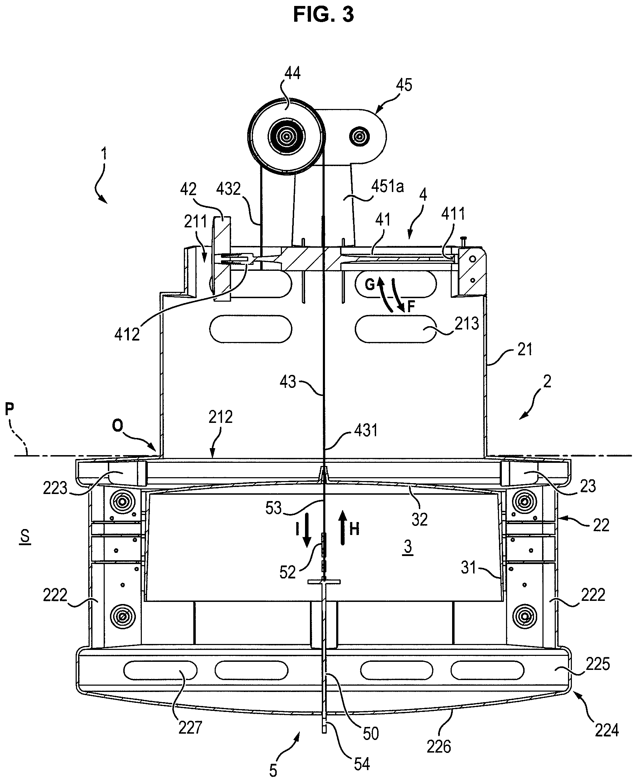

Comme cela apparaît mieux sur la figure 3, le dispositif 1 de diffusion d'air conforme à l'invention comprend un corps 2 et un organe d'obturation 3. Ces différents éléments vont maintenant être décrits plus en détail.

Comme on peut le voir plus en détail, notamment sur les figures 1 à 3, le corps 2 présente une forme générale cylindrique et comprend deux parties, à savoir une partie supérieure 21 qui se prolonge vers le bas par une partie inférieure 22.

La partie supérieure cylindrique 21 est ouverte à son extrémité supérieure 211, ainsi qu'à son extrémité inférieure 212, de sorte que l'air se trouvant à l'extérieur de la salle S, notamment au-dessus du plafond P, peut pénétrer dans cette partie supérieure 21 et s'écouler en direction de la partie inférieure 22.

De façon avantageuse, la partie supérieure 21 présente au moins un orifice oblong 213, de préférence plusieurs, répartis uniformément sur sa périphérie. Ces orifices 213 favorisent encore la pénétration de l'air à l'intérieur de la partie supérieure 21 et ont également pour effet d'alléger le poids total de celle-ci.

De façon avantageuse mais non obligatoire, on notera que le diamètre de la partie supérieure 21 est légèrement inférieur au diamètre de la partie inférieure 22, afin de faciliter son introduction à l'intérieur du plafond P et des éléments tels que gaines, circuits électriques, etc., qui peuvent se trouver au-dessus de celui-ci.

La partie inférieure 22 comprend une paroi cylindrique périphérique 220. Cette paroi 220 présente sur au moins une partie de sa hauteur, de préférence en partie haute, au moins une fenêtre 221 de diffusion d'air, de préférence plusieurs fenêtres 221, réparties uniformément sur sa périphérie.

Dans le mode de réalisation représenté sur les figures, les fenêtres 221 sont au nombre de quatre, séparées par quatre montants verticaux 222, dont seuls trois sont visibles sur la figure 1. Les fenêtres 221 s'étendent en arc-de-cercle.

De préférence, les fenêtres 221 s'étendent sur la plus grande partie de la paroi périphérique 220 à l'exception des montants 222, de façon à favoriser une diffusion d'air quasiment sur 360°.

De façon avantageuse, la partie inférieure 22 du corps 2 présente à son extrémité supérieure, plus précisément au niveau de sa jonction avec la partie supérieure 21, une couronne annulaire 223 et à son extrémité inférieure, une embase 224.

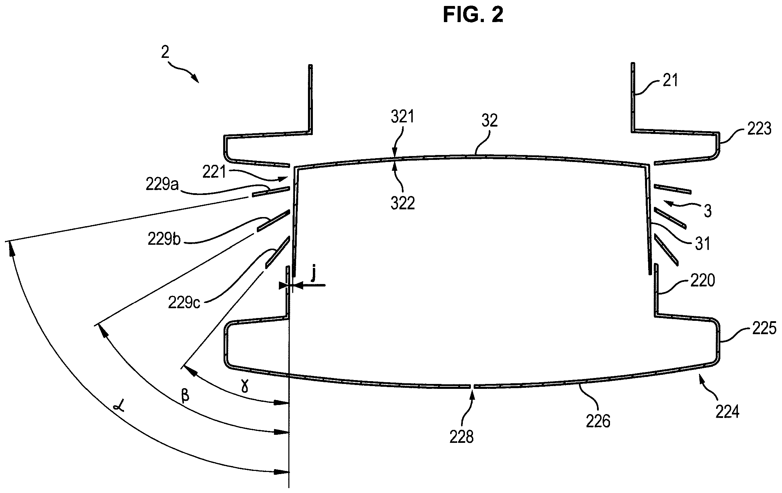

Comme cela apparaît mieux sur la vue en coupe de la figure 2, la couronne annulaire 223 présente une section transversale en U, débouchant vers l'intérieur du corps 2.

L'embase 224 présente une portion annulaire 225 à section transversale en U, ouverte vers l'intérieur du corps cylindrique 2, obturée par un fond 226.

Les montants 222 s'étendent verticalement entre la couronne 223 et l'embase 224.

On notera que la présence du fond 226 n'est pas indispensable.

De façon avantageuse, la portion annulaire 225 est percée de plusieurs trous oblongs 227. Ces trous oblongs 227 permettent notamment l'introduction d'un jet de liquide de nettoyage du dispositif.

De préférence, le fond 226 est percé d'une lumière centrale 228 de forme oblongue, qui permet notamment l'évacuation du liquide de nettoyage.

De préférence également, le fond 226 est légèrement bombé, sa concavité étant orientée vers le haut, de façon à faciliter l'évacuation du liquide de nettoyage qui est ainsi entraîné vers la lumière 228.

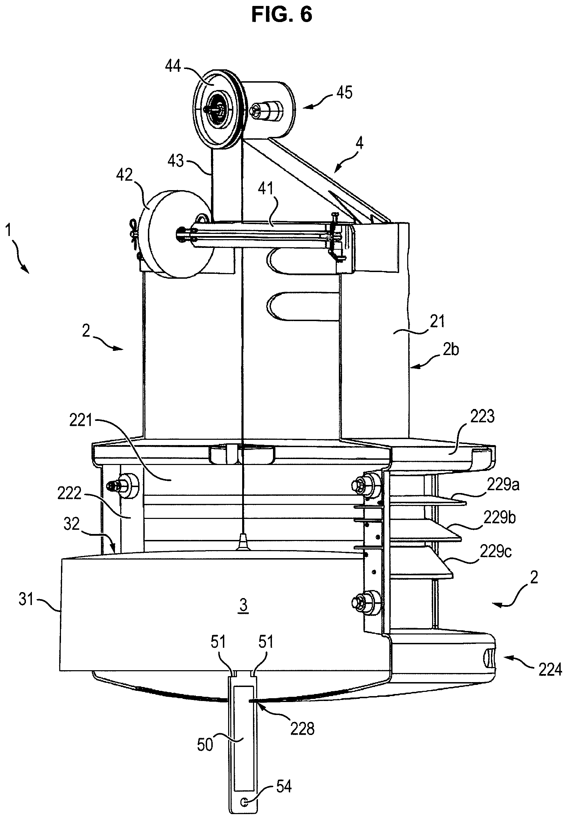

De façon avantageuse, le corps 2 est constitué de deux demi-coques identiques 2a, 2b assemblées l'une à l'autre, par exemple par vissage. Sur la figure 6, on peut voir la demi-coque référencée 2b.

Le corps 2 est avantageusement réalisé en matière plastique et peut être obtenu par moulage.

Conformément à l'invention, les fenêtres 221 sont équipées d'au moins deux rangées d'ailettes superposées, par exemple trois rangées d'ailettes, dans le mode de réalisation représenté sur les figures.

Les ailettes de la rangée supérieure sont référencées 229a, celles de la rangée médiane 229b et celles de la rangée inférieure 229c.

Comme on peut le voir sur la figure 2, les orientations des différentes rangées d'ailettes sont différentes. Plus précisément, plus la rangée d'ailettes est basse et plus elle forme un angle faible par rapport à la verticale. Ainsi, les ailettes 229c forment un angle γ avec la verticale, γ étant compris entre 35° et 45°, de préférence égal à 40°. Les ailettes 229b forment un angle β par rapport à la verticale compris entre 55° et 65°, de préférence égal à 60°. Enfin, les ailettes 229a forment un angle α par rapport à la verticale compris entre 75° et 85°, de préférence égal à 80°.

Les différentes ailettes 229a, 229b et 229c ont une forme en arc-de-cercle.

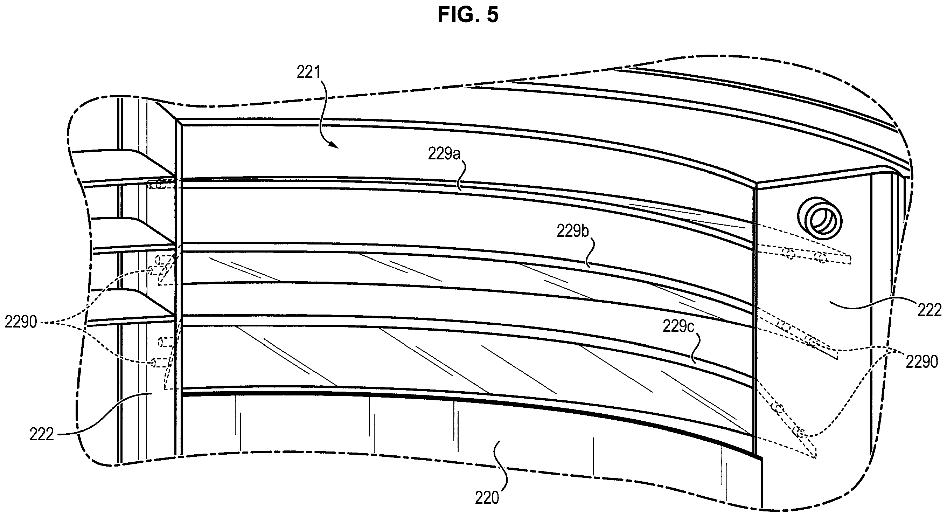

De préférence, et comme cela apparaît mieux sur la figure 5, les ailettes 229a, 229b et 229c présentent à leurs deux extrémités des tétons 2290, par exemple ici quatre tétons, susceptibles d'être emboîtés à l'intérieur du corps 2 et plus précisément des montants 222, par une légère déformation élastique de ces ailettes.

L'organe d'obturation 3 va maintenant être décrit en faisant référence à la figure 2.

L'organe d'obturation 3 est monté à l'intérieur du corps cylindrique 2, à l'intérieur duquel il peut coulisser verticalement, comme cela sera décrit ultérieurement.

Cet organe d'obturation 3 comprend une paroi périphérique cylindrique 31 verticale ou sensiblement verticale et un disque d'obturation central 32 horizontal ou sensiblement horizontal, obturant l'espace ménagé à l'intérieur de la paroi cylindrique 31.

De façon avantageuse, l'organe d'obturation 3 présente la forme d'une cloche, comme représenté sur les figures 2 à 4. Toutefois, d'autres formes pourraient être envisagées. Le disque d'obturation centrale 32 pourrait ainsi être disposé en un point quelconque de la hauteur de la paroi périphérique 31, par exemple en son milieu ou à sa base.

Dans le cas où l'organe 3 a la forme d'une cloche, on notera que, de façon avantageuse, le disque d'obturation 32 est légèrement bombé, sa concavité étant orientée vers le bas. Une telle forme permet de chasser plus aisément les poussières qui pourraient s'accumuler sur sa face supérieure, lorsque le dispositif est nettoyé.

On notera que le diamètre extérieur de la paroi cylindrique 31 correspond sensiblement au diamètre intérieur de la paroi cylindrique 220 de la partie inférieure 22 du corps 2, au jeu j de coulissement près. Le rôle de ce jeu j sera décrit ultérieurement.

Selon le mode de réalisation représenté sur les figures, le dispositif 1 comprend également un balancier 4 qui va maintenant être décrit en faisant référence aux figures 1, 3, 4 et 6.

Le balancier 4 comprend un fléau 41 monté pivotant à l'une de ses extrémités 411, dite "extrémité d'articulation" par rapport à la partie supérieure 21 du corps 2.

A l'extrémité opposée 412 du fléau 41, dite "extrémité active", est monté un contrepoids 42.

Un câble 43 est fixé à l'une de ses extrémités 431, à l'organe d'obturation 3, de préférence en un point central de celui-ci. Le câble 43 est en outre fixé à son autre extrémité 432 au fléau 41, de préférence en un point situé entre le contrepoids 42 et l'extrémité d'articulation 411.

Le câble 43 est par ailleurs enroulé autour d'une poulie 44 montée sur une potence 45.

La potence 45 est par exemple constituée par deux pattes 451a, 451b, respectivement solidaires des demi-coques 2a et 2b constituant le corps 2, de préférence venue matière avec celui-ci. Ces pattes 451a et 451b sont conformées de façon à maintenir la poulie 44 au-dessus du fléau 41.

Comme on peut le voir sur la figure 3, le fléau 41 peut pivoter vers le bas (flèche F) autour de son extrémité d'articulation 411, ce qui a pour effet d'agir sur l'extrémité 432 du câble 43 et de provoquer un mouvement ascendant de l'organe d'obturation 3 (flèche H).

Inversement, le fléau peut remonter (flèche G), ce qui a pour effet de provoquer le mouvement vers le bas (flèche I) de l'organe 3.

De façon avantageuse, le contrepoids 42 est fixé sur le fléau 41 par des moyens de réglage de sa position qui permettent son ajustement longitudinal sur le fléau. A titre d'exemple, l'extrémité active 412 du fléau peut être filetée et le contrepoids 42 peut présenter un orifice central taraudé, de sorte que par vissage, il est possible de déplacer longitudinalement le contrepoids 42, sur le fléau 41. Ceci permet d'équilibrer le système en fonction du poids de l'organe 3.

De façon également avantageuse, la poulie 44 est une poulie de démultiplication, avec par exemple deux poulies côte à côte de diamètres différents, comme cela apparaît mieux sur la figure 1, ce qui permet de réduire l'angle de pivotement nécessaire du fléau 41 pour obtenir une course donnée de montée et de descente de l'organe d'obturation 3.

L'organe d'obturation 3 et le balancier 4 sont avantageusement réalisés en matière plastique.

On notera que d'autres systèmes de balancier 4 seraient également envisageables sans pour autant sortir du cadre de l'invention, dès lors qu'ils permettent d'assurer la fonction de déplacement vertical en coulissement de l'organe 3 à l'intérieur du corps 2.

Le fonctionnement du dispositif de diffusion d'air 1 conforme à l'invention va maintenant être décrit. Ce dispositif est destiné à être fixé au niveau d'une surface, par exemple ici le plafond P, qui sépare hermétiquement la salle S d'un autre volume d'air en amont, situé par exemple dans le faux-plafond, dans les gaines, etc., situé(es) au-dessus du plafond.

A cet effet, le dispositif de diffusion 1 comprend par exemple des moyens de fixation, tels que des pattes de fixation 23, qui permettent de venir plaquer le dispositif 1 à l'intérieur de l'orifice O et contre le plafond P, de sorte que la partie supérieure 21 du corps 2 soit au-dessus du plafond P et la partie inférieure 22 en dessous de celui-ci, dans la salle S.

Le dispositif de diffusion d'air 1 conforme à l'invention est un système mécanique, passif et autonome.

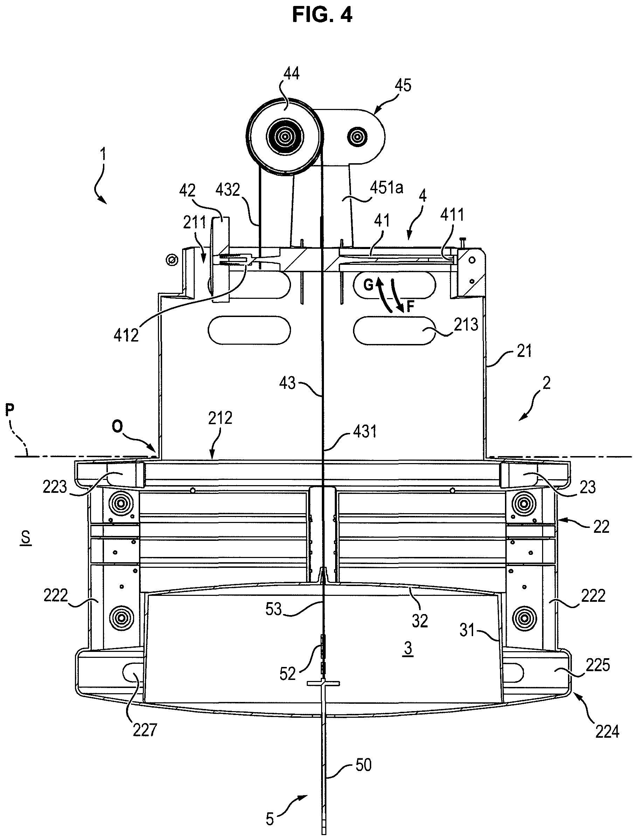

L'élément d'obturation 3 est mobile entre une position dite "de repos", représentée sur la figure 3 et une position dite "de diffusion", représentée sur la figure 4.

Dans la position de repos, la paroi périphérique 31 de l'organe 3 se trouve en regard de la ou des fenêtre(s) de diffusion d'air 221 qu'elle obture totalement et le disque d'obturation 32 est en position haute, de façon à interdire la circulation d'air depuis la partie supérieure 21 du corps 2, vers la partie inférieure 22 et au travers de la ou lesdites fenêtres de diffusion 221.

De préférence, la position du contrepoids 42 est ajustée de façon que le fléau 41 soit sensiblement horizontal.

Dans cette position de repos, les pressions régnant de part et d'autre des deux faces opposées du disque d'obturation 32 sont identiques.

Selon un premier mode de réalisation de l'invention, la salle S est équipée d'un système de dépression mécanique qui permet d'ajuster les besoins en ventilation de la salle. Lorsque le système de ventilation est mis en marche, une dépression se crée à l'intérieur de la salle S par rapport à la pression régnant au-dessus du plafond P. Il existe alors une différence de pression de part et d'autre du disque d'obturation 32. Cette dépression a pour effet de faire descendre l'organe d'obturation 3 par coulissement à l'intérieur du corps 2 (flèche I).

Plus la dépression créée est forte et plus l'organe d'obturation 3 descend, jusqu'à atteindre la position de diffusion d'air maximale représentée sur la figure 4.

Dans la position de diffusion d'air, l'air qui se trouve dans la partie supérieure 21 du corps 2 ou au-dessus est aspiré à l'intérieur de cette partie 21, descend dans la partie inférieure 22 et s'échappe par les fenêtres 221.

L'organe d'obturation 3 peut également occuper toutes les positions intermédiaires de diffusion d'air, dans lesquelles sa paroi périphérique 31 n'obture plus la totalité de la surface ou des surface(s) des fenêtres 221 mais une partie seulement.

Selon un second mode de réalisation de l'invention, la salle S est équipée de simples bouches d'évacuation d'air et un dispositif de pulsation d'air sous pression est installé en amont de la prise d'air 21 du dispositif.

Une surpression est aussi créée en amont du dispositif 1 tandis que la salle S reste à la pression atmosphérique. Pour le reste, le déplacement de l'élément d'obturation 3 reste identique.

On notera que le jeu « j » existant entre les parois 31 et 220 est dimensionné de façon à autoriser le coulissement de l'organe d'obturation 3 dans le corps 2, sans frottements, tout en permettant de conserver un possible écart de pression entre les deux faces opposées (face supérieure 321 et face inférieure 322) du disque d'obturation 32.

En fonction de la position relative de l'organe 3 en regard des différentes ailettes 229a, 229b et 229c, on comprend que l'air n'est pas dirigé selon le même angle à l'intérieur de la salle S et donc en direction des animaux qui s'y trouvent.

Ainsi, par exemple, en hiver, lorsque l'air entrant de l'extérieur est froid, le système de ventilation est ajusté de façon à ce que le renouvellement d'air soit minimum, la dépression et le débit d'air ainsi créés sont donc faibles. Dans ce cas, l'organe d'obturation 3 descend légèrement, de sorte que l'air ne sort qu'entre la couronne 223 et l'ailette supérieure 229a qui est pratiquement horizontale. Dans ce cas, l'air est donc diffusé à l'horizontale, à proximité du plafond, où il se réchauffe avant d'arriver au contact des animaux.

Inversement, en été, lorsque l'air entrant est plus chaud, le système de ventilation est actionné de façon à renouveler l'air au maximum. La dépression et le débit créés sont donc importants. Dans ce cas, l'organe 3 descend davantage vers le bas du fait de la dépression et une partie importante de l'air passe entre les ailettes 229b et 229c ou entre l'ailette 229c et la base du dispositif. L'air est ainsi orienté beaucoup plus directement vers les animaux. En outre, bien que le débit d'air soit plus important, comme la surface de passage de l'air au travers du dispositif 1 augmente également, la vitesse de l'air reste constante. De façon avantageuse, le dispositif 1 est configuré pour fournir une vitesse d'air constante comprise entre 3 m/s et 7 m/s, de préférence de 5 m/s.

On notera enfin que la conformation cylindrique du dispositif de diffusion d'air 1 permet de diffuser l'air de manière homogène dans toutes les directions et de casser le phénomène de roue précédemment décrit, contrairement aux dispositifs de l'état de la technique qui diffusent l'air seulement sur un certain secteur angulaire.

En outre, le fond 226 (lorsqu'il est présent), situé sous l'organe 3 permet d'éviter les courants d'air verticaux passant au travers du jeu j existant entre la paroi périphérique 31 et la paroi 220.

L'utilisation du contrepoids permet de garantir que le dispositif se régule automatiquement de manière passive, puisque, dès que la dépression diminue à l'intérieur de la salle 5 (et donc sur la face inférieure du disque d'obturation 32), le contrepoids 42 tend à rappeler l'organe d'obturation 3 dans sa position de repos d'origine.

Enfin, on notera que le corps en deux parties 2a et 2b est facile à assembler autour de l'organe d'obturation 3.

De façon avantageuse, le dispositif 1 peut également comprendre un dispositif de sécurité 5 permettant de verrouiller l'élément d'obturation 3 en position de diffusion d'air, de préférence dans sa position de diffusion d'air maximale, pour la sécurité des animaux.

Un exemple de réalisation de ce dispositif de sécurité va maintenant être décrit en référence à la figure 6.

Le dispositif de sécurité 5 comprend une lamelle 50 verticale présentant deux ailes latérales 51.

L'extrémité supérieure de la lamelle 50 est fixée *via* un ressort 52 et un fil 53, à l'organe d'obturation 3, de préférence en un point situé au centre du disque d'obturation 32, (voir figures 3 et 4).

De préférence, l'extrémité inférieure de la lamelle 50 est percée d'un petit trou 54, qui permet le passage d'un crochet permettant d'exercer une traction sur la lamelle 50.

Les dimensions de la lamelle 50 et des ailes latérales 51 sont conçues de façon que le dispositif 5 puisse traverser la lumière oblongue 228, ménagée dans le fond 226, sous réserve que la lamelle 50 soit orientée angulairement correctement.

L'opérateur peut ainsi exercer une traction sur la lamelle 50, par exemple en crochetant le petit trou 54 jusqu'à faire sortir la lamelle 50 et les ailettes 51 sous le fond 226, puis après avoir exercé une rotation sur la lamelle 50, venir placer celle-ci, de façon que les ailettes 51 soient en butée contre les portions du fond 226 situées de part et d'autre de la partie la plus étroite de la lumière oblongue 228. Le ressort 52 tend en permanence à rappeler la lamelle 50 vers le haut. Dans cette position, l'organe d'obturation 3 est maintenu dans sa position basse.

Par déverrouiller le dispositif de sécurité 5, l'opérateur exerce une légère traction vers le bas, fait pivoter la lamelle 50 puis la relâche pour qu'elle remonte au travers de la lumière oblongue 228, sous l'action de la force de rappel du ressort 52.

Bien que cela ne soit pas représenté sur les figures, le dispositif de diffusion d'air 1 peut être équipé d'au moins un dispositif d'éclairage de la salle S, de préférence de plusieurs. De façon avantageuse, ce dispositif est un bandeau de diodes électroluminescentes (LED). Ce dispositif d'éclairage est fixé sur la partie inférieure 22 du corps cylindrique 2 à un endroit où il ne modifie pas la circulation d'air, par exemple sur le fond 226, la portion annulaire 225 de l'embase 224, les montants 222 ou la couronne annulaire 223, voire même sur la paroi périphérique 220.

Ce dispositif d'éclairage améliore le confort de l'éleveur et des animaux.

Le dispositif 1 peut également comprendre au moins un capteur de mesure analogique ou numérique de différents paramètres. On citera par exemple des capteurs de mesure :
- du débit d'air circulant dans le dispositif 1 ou au travers des fenêtres 221,
- de la température de l'air dans la salle S ou dans le dispositif 1,
- de la différence de pression entre les deux faces du disque d'obturation 32.

On notera que ces capteurs peuvent être autoalimentés, par exemple en utilisant le débit d'air comme source d'énergie.

## Revendications

1. Dispositif de diffusion d'air (1) à l'intérieur d'une salle d'un bâtiment, notamment une salle d'élevage d'animaux, comprenant:
- un corps cylindrique (2) dont la partie supérieure (21) constitue une prise d'air et dont la partie inférieure (22) comprend au moins une fenêtre de diffusion d'air (221) qui s'étend sur sa périphérie, cette fenêtre (221) étant munie d'ailettes (229a, 229b, 229c), le dispositif étant **caractérisé en ce que** la fenêtre (221) est munie d'ailettes sur au moins deux rangées en hauteur, les rangées successives d'ailettes du bas vers le haut étant de plus en plus inclinées par rapport à la verticale,
- **en ce que** le dispositif comprend en outre un organe d'obturation (3) monté coulissant verticalement à l'intérieur de la partie inférieure (22) dudit corps, cet organe d'obturation (3) comprenant une paroi périphérique cylindrique (31) verticale ou sensiblement verticale et un disque d'obturation central (32) obturant l'espace ménagé à l'intérieur de ladite paroi cylindrique (31), le diamètre extérieur de ladite paroi cylindrique (31) correspondant au diamètre intérieur de la partie inférieure (22) dudit corps au jeu de coulissement près,
**en ce que** ledit organe d'obturation (3) est mobile entre une position dite "de repos", dans laquelle sa paroi périphérique (31) se trouve en regard de la ou des fenêtre(s) de diffusion (221) du corps, de façon à interdire la circulation d'air depuis la partie supérieure (21) du corps au travers de ladite ou desdites fenêtre(s) de diffusion, et une position dite "de diffusion", dans laquelle sa paroi périphérique (31) ne se trouve plus en regard d'au moins une partie de la surface de ladite ou desdites fenêtre(s) de diffusion (221) du corps, de façon à autoriser la circulation d'air depuis la partie supérieure du corps au travers de ladite ou desdites fenêtres de diffusion,
et **en ce que** le passage de la position de repos à la position de diffusion s'effectue à l'encontre de la force de pesanteur d'un contrepoids (42), lorsque la pression régnant au niveau de la face inférieure (322) du disque d'obturation (32) est inférieure à celle régnant au niveau de la face supérieure (321) dudit disque.

2. Dispositif de diffusion d'air selon la revendication 1, **caractérisé en ce qu'**il comprend un balancier (4) monté pivotant auquel sont fixés ledit organe d'obturation (3) et ledit contrepoids (42).

3. Dispositif de diffusion d'air selon la revendication 1 ou 2, **caractérisé en ce que** ledit organe d'obturation (3) à la forme d'une cloche ouverte à son extrémité inférieure, le disque d'obturation (32) constituant le fond de ladite cloche.

4. Dispositif de diffusion d'air selon l'une quelconque des revendications précédentes, **caractérisé en ce que** les fenêtres de diffusion (221) sont munies de trois rangées d'ailettes, les ailettes (229a) de la rangée supérieure formant un angle (α) de 75° à 85° par rapport à la verticale, les ailettes (229b) de la rangée du milieu formant un angle (β) de 55° à 65° par rapport à la verticale et les ailettes (229c) de la rangée inférieure formant un angle (γ) de 35° à 45° par rapport à la verticale.

5. Dispositif de diffusion d'air selon l'une quelconque des revendications précédentes, **caractérisé en ce que** l'extrémité basse de la partie inférieure (22) du corps est obturée par un fond (226).

6. Dispositif de diffusion d'air selon l'une quelconque des revendications précédentes, **caractérisé en ce que** le balancier (4) comprend un fléau (41) monté articulé à l'une de ses deux extrémités (411), dite "extrémité d'articulation", à la partie supérieure du corps, **en ce que** le contrepoids (42) est fixé à l'extrémité opposée (412), dite "active" du fléau et **en ce que** l'organe d'obturation (3) est lié à une extrémité (431) d'un câble (43) dont l'extrémité opposée (432) est fixée à ladite extrémité active (412) du fléau, ce câble (43) passant autour d'une poulie (44) disposée au-dessus du fléau (41) et montée sur une potence (45) fixée à la partie supérieure (21) du corps, de sorte que lorsque l'organe d'obturation (3) descend dans le corps (2), il entraîne l'extrémité active (412) du fléau (41) vers le haut, tandis que le contrepoids (42) tend à entraîner cette extrémité active (412) vers le bas.

7. Dispositif de diffusion d'air selon la revendication 6, **caractérisé en ce que** le contrepoids (42) est fixé sur le fléau (41) par des moyens de réglage permettant l'ajustement de sa position le long dudit fléau.

8. Dispositif de diffusion d'air selon l'une quelconque des revendications précédentes, **caractérisé en ce qu'**il comprend un dispositif de sécurité (5) permettant de verrouiller l'organe d'obturation (3) en position de diffusion.

9. Dispositif de diffusion d'air selon les revendications 5 et 8, **caractérisé en ce que** le fond (226) comprend une lumière centrale (228) de forme oblongue, **en ce que** le dispositif de sécurité (5) comprend une lamelle verticale (50) présentant deux ailes latérales (51), cette lamelle (50) étant fixée par un ressort (52) et un fil (53) à l'organe d'obturation (3) et étant disposée de façon que son extrémité inférieure traverse ladite lumière oblongue (228) et fasse saillie hors du fond (226), cette lamelle (50) pouvant être déplacée vers le bas à l'encontre de la force de rappel du ressort (52), de façon à entraîner le déplacement de l'organe d'obturation (3) en position de diffusion et à ce que les deux ailes latérales (51) traversent la lumière oblongue (228) et cette lamelle pouvant pivoter angulairement de façon à bloquer lesdites ailes (51) contre la face inférieure du fond (226) du corps.

10. Dispositif de diffusion d'air selon l'une des revendications précédentes, **caractérisé en ce qu'**il comprend au moins un dispositif d'éclairage, tel qu'un bandeau de diodes électroluminescentes (LED), fixé sur la partie inférieure (22) dudit corps cylindrique.

11. Dispositif de diffusion d'air selon l'une des revendications précédentes, **caractérisé en ce qu'**il comprend au moins un capteur analogique ou numérique de mesure du débit d'air à l'intérieur du dispositif de diffusion (1) ou de mesure de la température de l'air ou de mesure de la différence de pression entre les deux faces du disque d'obturation (32).

12. Bâtiment, notamment bâtiment d'élevage, comprenant intérieurement une salle (S) présentant une ouverture (O) ménagée dans son plafond (P), **caractérisé en ce qu'**il est équipé du dispositif de diffusion d'air (1) selon l'une quelconque des revendications précédentes, ce dispositif (1) étant disposé dans l'ouverture (O) ménagée dans le plafond (P), de façon que la partie inférieure (22) de son corps (2) munie des fenêtres de diffusion (221) se trouve dans ladite salle (S) et que sa partie supérieure (21) se trouve au-dessus dudit plafond.

13. Bâtiment selon la revendication 12, **caractérisé en ce qu'**il comprend également un dispositif d'aspiration de l'air se trouvant à l'intérieur de la salle (S).

14. Bâtiment selon la revendication 12, **caractérisé en ce qu'**il comprend un dispositif de pulsation d'air en amont du dispositif de diffusion d'air (1) et **en ce que** la salle (S) est équipée d'au moins une bouche d'évacuation d'air hors de la salle.

## Patentansprüche

1. Vorrichtung (1) zur Verbreitung von Luft im Inneren eines Raumes eines Gebäudes, insbesondere eines Tierzuchtraums, die umfasst:
- einen zylindrischen Körper (2), dessen oberer Teil (21) einen Lufteintritt bildet und dessen unterer Teil (22) mindestens ein Luftverbreitungsfenster (221) umfasst, das sich über seinen Umfang erstreckt, wobei dieses Fenster (221) mit Flügeln (229a, 229b, 229c) versehen ist, wobei die Vorrichtung **dadurch gekennzeichnet ist, dass** das Fenster (221) auf mindestens zwei Höhenreihen mit Flügeln versehen ist, wobei die aufeinanderfolgenden Reihen von Flügeln von unten nach oben immer weiter in Bezug auf die Vertikale geneigt sind,
- dadurch, dass die Vorrichtung ferner ein Verschlussorgan (3) umfasst, das vertikal verschiebbar im Inneren des unteren Teils (22) des Körpers montiert ist, wobei dieses Verschlussorgan (3) eine vertikale oder im Wesentlichen vertikale zylindrische Umfangswand (31) und eine mittlere Verschlussscheibe (32) umfasst, die den im Inneren der zylindrischen Wand (31) eingerichteten Raum verschließt, wobei der Außendurchmesser der zylindrischen Wand (31) bis auf das Verschiebungsspiel dem Innendurchmesser des inneren Teils (22) des Körpers entspricht,
dadurch, dass das Verschlussorgan (3) zwischen einer sogenannten "Ruheposition", in der seine Umfangswand (31) sich der oder den Verbreitungsfenstern (221) des Körpers gegenüberstehend befindet, derart, dass der Umlauf von Luft von dem oberen Teil (21) des Körpers durch das oder die Verbreitungsfenster versperrt wird, und einer sogenannten "Verbreitungsposition" beweglich ist, in der seine Umfangswand (31) sich nicht mehr dem mindestens einen Teil der Fläche des oder der Verbreitungsfenster (221) des Körpers gegenüberstehend befindet, derart, dass der Umlauf von Luft ausgehend von dem oberen Teil des Körpers durch das oder die Verbreitungsfenster ermöglicht wird,
und dadurch, dass der Übergang von der Ruheposition in die Verbreitungsposition gegen die Schwerkraft eines Gegengewichts (42) durchgeführt wird, wenn der Druck, der im Bereich der unteren Seite (322) der Verschlussscheibe (32) herrscht, kleiner als derjenige ist, der im Bereich der oberen Seite (321) der Scheibe herrscht.

2. Vorrichtung zur Verbreitung von Luft nach Anspruch 1, **dadurch gekennzeichnet, dass** sie einen schwenkbar montierten Schwinghebel (4) umfasst, an dem das Verschlussorgan (3) und das Gegengewicht (42) befestigt sind.

3. Vorrichtung zur Verbreitung von Luft nach Anspruch 1 oder 2, **dadurch gekennzeichnet, dass** das Verschlussorgan (3) die Form einer an ihrem unteren Ende offenen Glocke aufweist, wobei die Verschlussscheibe (32) den Boden der Glocke bildet.

4. Vorrichtung zur Verbreitung von Luft nach einem der vorhergehenden Ansprüche, **dadurch gekennzeichnet, dass** die Verbreitungsfenster (221) mit drei Reihen von Flügeln versehen sind, wobei die Flügel (229a) der oberen Reihe einen Winkel (α) von 75° bis 85° in Bezug auf die Vertikale bilden, die Flügel (229b) der mittleren Reihe einen Winkel (β) von 55° bis 65° in Bezug auf die Vertikale bilden und die Flügel (229c) der unteren Reihe einen Winkel (γ) von 35° bis 45° in Bezug auf die Vertikale bilden.

5. Vorrichtung zur Verbreitung von Luft nach einem der vorhergehenden Ansprüche, **dadurch gekennzeichnet, dass** das untere Ende des unteren Teils (22) des Körpers durch einen Boden (226) verschlossen ist.

6. Vorrichtung zur Verbreitung von Luft nach einem der vorhergehenden Ansprüche, **dadurch gekennzeichnet, dass** der Schwinghebel (4) einen Waagebalken (41) umfasst, der an einem seiner zwei Enden (411), dem sogenannten "Gelenkende", am oberen Teil des Körpers gelenkig gelagert ist, dadurch, dass das Gegengewicht (42) am entgegengesetzten, sogenannten "aktiven" Ende (412) des Waagebalkens befestigt ist und dass das Verschlussorgan (3) mit einem Ende (431) eines Kabels (43) verbunden ist, dessen entgegengesetztes Ende (432) an dem aktiven Ende (412) des Waagebalkens befestigt ist, wobei dieses Kabel (43) um eine Rolle (44) verläuft, die über dem Waagebalken (41) angeordnet ist und an einem Träger (45) gelagert ist, der an dem oberen Teil (21) des Körpers befestigt ist, derart, dass, wenn das Verschlussorgan (3) den Körper (2) absteigt, es das aktive Ende (412) des Waagebalkens (41) nach oben antreibt, während das Gegengewicht (42) dazu neigt, dieses aktive Ende (412) nach unten anzutreiben.

7. Vorrichtung zur Verbreitung von Luft nach Anspruch 6, **dadurch gekennzeichnet, dass** das Gegengewicht (42) an dem Wiegebalken (41) durch Regelungsmittel befestigt ist, die die Anpassung seiner Position entlang des Wiegebalkens ermöglichen.

8. Vorrichtung zur Verbreitung von Luft nach einem der vorhergehenden Ansprüche, **dadurch gekennzeichnet, dass** sie eine Sicherheitsvorrichtung (5) umfasst, die das Verriegeln des Verschlussorgans (3) in der Verbreitungsposition ermöglicht.

9. Vorrichtung zur Verbreitung von Luft nach Anspruch 5 und 8, **dadurch gekennzeichnet, dass** der Boden (226) einen mittleren Schlitz (228) mit länglicher Form umfasst, dadurch, dass die Sicherheitsvorrichtung (5) eine vertikale Lamelle (50) umfasst, die zwei seitliche Flügel (51) aufweist, wobei diese Lamelle (50) über eine Feder (52) und einen Draht (53) an dem Verschlussorgan (3) befestigt ist und derart angeordnet ist, dass sein unteres Ende den länglichen Schlitz (228) durchquert und aus dem Boden (226) hervorsteht, wobei diese Lamelle (50) derart gegen die Rückstellkraft der Feder (52) nach unten verlagert werden kann, dass die Verlagerung des Verschlussorgans (3) in die Verbreitungsposition bewirkt wird, und dadurch, dass die zwei seitlichen Flügel (51) den länglichen Schlitz (228) durchqueren und diese Lamelle winklig schwenken kann, um die Flügel (51) gegen die untere Seite des Bodens (226) des Körpers zu sperren.

10. Vorrichtung zur Verbreitung von Luft nach einem der vorhergehenden Ansprüche, **dadurch gekennzeichnet, dass** sie mindestens eine Beleuchtungsvorrichtung, wie beispielsweise ein Band von Leuchtdioden (LED), umfasst, das an dem unteren Teil (22) des zylindrischen Körpers befestigt ist.

11. Vorrichtung zur Verbreitung von Luft nach einem der vorhergehenden Ansprüche, **dadurch gekennzeichnet, dass** sie mindestens einen analogen oder digitalen Sensor zum Messen des Luftdurchsatzes im Inneren der Verbreitungsvorrichtung (1) oder zum Messen der Lufttemperatur oder zum Messen des Druckunterschieds zwischen den zwei Seiten der Verschlussscheibe (32) umfasst.

12. Gebäude, insbesondere Zuchtgebäude, das innen einen Raum (S) umfasst, der eine Öffnung (O) aufweist, die in seiner Decke (P) eingerichtet ist, **dadurch gekennzeichnet, dass** es mit einer Luftverbreitungsvorrichtung (1) nach einem der vorhergehenden Ansprüche ausgerüstet ist, wobei diese Vorrichtung (1) in der Öffnung (O) angeordnet ist, die in der Decke (P) eingerichtet ist, derart, dass der untere Teil (22) ihres Körpers (2), der mit Verbreitungsfenstern (221) versehen ist, sich in dem Raum (S) befindet und dass ihr oberer Teil (21) sich über der Decke befindet.

13. Gebäude nach Anspruch 12, **dadurch gekennzeichnet, dass** es auch eine Luftansaugvorrichtung umfasst, die sich im Inneren des Raumes (S) befindet.

14. Gebäude nach Anspruch 12, **dadurch gekennzeichnet, dass** es der Luftverbreitungsvorrichtung (1) vorgelagert eine Luftpulsierungsvorrichtung umfasst, und dadurch, dass der Raum (S) mit mindestens einer Öffnung zur Ableitung von Luft aus dem Raum ausgerüstet ist.

## Claims

1. An air diffusion device (1) inside a room of a building, in particular an animal breeding room, comprising:
- a cylindrical body (2) whose upper part (21) constitutes an air intake and whose lower part (22) comprises at least one air diffusion window (221) which extends on its periphery, this window (221) being provided with fins (229a, 229b, 229c),
the device being **characterized in that** the window (221) is provided with fins on at least two rows in height, the successive rows of fins from bottom to top being more and more inclined relative to the vertical,
**in that** the device further comprises a closure member (3) mounted to slide vertically inside the lower part (22) of said body, this closure member (3) comprising a vertical or substantially vertical cylindrical peripheral wall (31) and a central closure disk (32) closing off the space formed inside said cylindrical wall (31), the outside diameter of said cylindrical wall (31) corresponding to the inside diameter of the lower part (22) of said body within the nearest sliding clearance,
**in that** said closure member (3) is movable between a position called "rest" position, in which its peripheral wall (31) is located opposite the diffusion window(s) (221) of the body, so as to prevent the circulation of air from the upper part (21) of the body through said diffusion window(s), and a position called "diffusion" position, in which its peripheral wall (31) is no longer located opposite at least part of the surface of said diffusion window(s) (221) of the body, so as to allow the circulation of air from the upper part of the body through said diffusion window(s),
and **in that** the switching from the rest position to the diffusion position takes place against the gravitational force of a counterweight (42), when the pressure prevailing at the lower face (322) of the closure disk (32) is lower than the one prevailing at the upper face (321) of said disk.

2. The air diffusion device according to claim 1, **characterized in that** it comprises a pivotally mounted rocker (4) to which said closure member (3) and said counterweight (42) are fixed.

3. The air diffusion device according to claim 1 or 2, **characterized in that** said closure member (3) has the shape of a bell open at its lower end, the closure disk (32) constituting the bottom of said bell.

4. The air diffusion device according to any one of the preceding claims, **characterized in that** the diffusion windows (221) are provided with three rows of fins, the fins (229a) of the upper row forming an angle (α) from 75° to 85° relative to the vertical, the fins (229b) of the middle row forming an angle (β) from 55° to 65° relative to the vertical and the fins (229c) of the lower row forming an angle (γ) from 35° to 45° relative to the vertical.

5. The air diffusion device according to any one of the preceding claims, **characterized in that** the low end of the lower part (22) of the body is closed off by a bottom (226).

6. The air diffusion device according to any one of the preceding claims, **characterized in that** the rocker (4) comprises a beam (41) hingedly mounted at one of its two ends (411), called "hinge end", at the upper part of the body, **in that** the counterweight (42) is fixed to the opposite end (412), called "active" end of the beam and **in that** the closure member (3) is linked to one end (431) of a cable (43) whose opposite end (432) is fixed to said active end (412) of the beam, this cable (43) passing around a pulley (44) disposed above the beam (41) and mounted on a bracket (45) fixed to the upper part (21) of the body, so that when the closure member (3) descends into the body (2), it drives the active end (412) of the beam (41) upwardly, while the counterweight (42) tends to drive this active end (412) downwardly.

7. The air diffusion device according to claim 6, **characterized in that** the counterweight (42) is fixed on the beam (41) by adjusting means allowing the adjustment of its position along said beam.

8. The air diffusion device according to any one of the preceding claims, **characterized in that** it comprises a safety device (5) that allows locking the closure member (3) in the diffusion position.

9. The air diffusion device according to claims 5 and 8, **characterized in that** the bottom (226) comprises an oblong-shaped central opening (228), **in that** the safety device (5) comprises a vertical blade (50) having two lateral wings (51), this blade (50) being fixed by a spring (52) and a wire (53) to the closure member (3) and being disposed so that its lower end passes through said oblong opening (228) and protrudes from the bottom (226), this blade (50) being able to be moved downwardly against the return force of the spring (52), so as to cause the displacement of the closure member (3) in the diffusion position and **in that** the two lateral wings (51) pass through the oblong opening (228) and this blade being able to pivot angularly so as to block said wings (51) against the lower face of the bottom (226) of the body.

10. The air diffusion device according to any of the preceding claims, **characterized in that** it comprises at least one lighting device, such as a strip of lightemitting diodes (LED), fixed on the lower part (22) of said cylindrical body.

11. The air diffusion device according to any of the preceding claims, **characterized in that** it comprises at least one analog or digital sensor for measuring the air flow rate inside the diffusion device (1) or for measuring the air temperature or measuring the pressure difference between the two faces of the closure disk (32) .

12. A building, in particular breeding building, comprising internally a room (S) having an aperture (O) formed in its ceiling (P), **characterized in that** it is equipped with the air diffusion device (1) according to any one of the preceding claims, this device (1) being disposed in the aperture (O) formed in the ceiling (P), such that the lower part (22) of its body (2) provided with diffusion windows (221) is in said room (S) and that its upper part (21) is above said ceiling.

13. The building according to claim 12, **characterized in that** it also comprises a device for suctioning air located inside the room (S).

14. The building according to claim 12, **characterized in that** it comprises an air pulse device upstream of the air diffusion device (1) and **in that** the room (S) is equipped with at least one outlet for the discharge of air out of the room.
